# EUROPEAN PATENT APPLICATION

(11) **EP 4 628 235 A1**
(43) Date of publication of application: **08.10.2025**
(21) Application number: 24842466.5
(22) Date of filing: 20.08.2024
(51) Int. Cl.: B23D 79/00, H01M 10/04

(54) **ROLLING CUTTER DEVICE FOR ROLLING GROOVING OF CYLINDRICAL BATTERY**

(30) Priority: 31.08.2023 CN 202322372071 U
(71) Applicant: Eve Energy Co., Ltd., Huizhou, Guangdong 516006 (CN)
(72) Inventor: YAN, Wenfei, Huizhou, Guangdong 516006 (CN); CHEN, Huan, Huizhou, Guangdong 516006 (CN); LIU, Mi, Huizhou, Guangdong 516006 (CN); SONG, Pengyuan, Huizhou, Guangdong 516006 (CN)
(74) Representative: Regimbeau
(86) International application number: PCT/CN2024/113262
(87) International publication number: WO 2025/016481

(57) **Abstract**

Provided is a rolling cutter device for rolling grooving of a cylindrical battery. The device includes an inclined rolling cutter mechanism, a flat rolling cutter mechanism, and a switching mechanism. The switching mechanism includes a rotation mechanism and a locking mechanism. The rotation mechanism is configured to drive the inclined rolling cutter mechanism and the flat rolling cutter mechanism to rotate. The locking mechanism is configured to lock the position of the rotation mechanism. When a rolling cutter needs to be switched, the rotation mechanism is rotated to interchange the positions of the inclined rolling cutter mechanism and the flat rolling cutter mechanism. Thus, it is ensured that the inclined rolling cutter of the inclined rolling cutter mechanism or the flat rolling cutter of the flat rolling cutter mechanism is tangent to the cylindrical cell. The locking mechanism then locks the position of the rotation mechanism, preventing any wobbling of the inclined rolling cutter or flat rolling cutter when groove rolling is performed on the cylindrical cell.

## Description

The present application claims priority to Chinese Patent Application No. 202322372071.1 filed with the China National Intellectual Property Administration (CNIPA) on Aug. 31, 2023, the disclosure of which is incorporated herein by reference in its entirety.

### TECHNICAL FIELD

The present application relates to the technical field of battery systems, in particular, a rolling cutter device for rolling grooving of a cylindrical battery.

### BACKGROUND

The assembly process of cylindrical batteries includes rolling grooving, cap welding, electrolyte injection, cap pressing, and sealing. During the manufacturing process of a cylindrical battery, a cylindrical core-formed by winding the positive electrode sheet, negative electrode sheet, and separator into a cylindrical shape-is placed into a battery housing to form a cell. After the cell undergoes rolling grooving via a grooving machine, the cap positioned at the grooved area of the cell can withstand the pressure during sealing, thereby improving the sealing performance of the battery.

### TECHNICAL PROBLEM

Two types of rolling grooving methods are provided for cylindrical cells, that is, flat rolling grooving and inclined rolling grooving. To achieve different battery performance, it is often necessary for the same type of battery to incorporate two grooving structures of a flat rolling groove and an inclined rolling groove. However, in actual production, conventional grooving equipment can only accommodate one type of rolling cutter. When the rolling cutter needs to be switched, the grooving machine must be shut down for replacement, resulting in prolonged rolling cutter replacement time and poor consistency of mechanisms after replacement. Thus, the battery production efficiency and battery performance are severely affected.

### TECHNICAL SOLUTION

The present application provides a rolling cutter device for rolling grooving of a cylindrical battery. The device includes an inclined rolling cutter mechanism, a flat rolling cutter mechanism, and a switching mechanism. The switching mechanism includes a rotation mechanism and a locking mechanism. The rotation mechanism is configured to drive the inclined rolling cutter mechanism and the flat rolling cutter mechanism to rotate. The locking mechanism is configured to lock the position of the rotation mechanism.

In some embodiments, the inclined rolling cutter mechanism and the flat rolling cutter mechanism are symmetrically disposed along the axis of the rotation mechanism so that the inclined rolling cutter mechanism and the flat rolling cutter mechanism can be switched and assembled with other mechanisms. The rotation mechanism can simultaneously drive the inclined rolling cutter mechanism and the flat rolling cutter mechanism to rotate so that the inclined rolling cutter mechanism and the flat rolling cutter mechanism can be swapped by setting up only one rotation mechanism.

In some embodiments, the rotation mechanism includes a rotation cylinder and an installation cylinder disposed above the rotation cylinder, and the rotation cylinder is configured to drive the installation cylinder to rotate horizontally. The rotation cylinder is configured to drive the inclined rolling cutter mechanism and the flat rolling cutter mechanism to rotate to achieve horizontal transposition. The installation cylinder is configured to assemble the inclined rolling cutter mechanism and the flat rolling cutter mechanism to achieve the connection between the rotation mechanism and the inclined rolling cutter mechanism and the flat rolling cutter mechanism.

In some embodiments, the rotation cylinder is mounted on a first base plate and can rotate horizontally on the first base plate, the locking mechanism includes a limiting plate and a positioning pin, and the limiting plate is fixed to the first base plate by the positioning pin. When the locking mechanism locks the rotation mechanism, the limiting plate abuts against the rotation cylinder and the installation cylinder of the rotation mechanism, and the limiting plate is tightly fitted against the contact surface of the rotation cylinder and the installation cylinder to lock the rotation mechanism. Thus, the rotation mechanism is stable and immovable on the first base plate.

In some embodiments, a horizontal slider is disposed below the first base plate and on a second base plate, and the horizontal slider is configured to drive the first base plate to slide horizontally on the second base plate so that the positions of the inclined rolling cutter mechanism and the flat rolling cutter mechanism can be adjusted.

In some embodiments, the inclined rolling cutter mechanism and the flat rolling cutter mechanism are symmetrically disposed on two sides of the installation cylinder, and the inclined rolling cutter mechanism and the flat rolling cutter mechanism can slide up and down along the installation cylinder to adjust the positions in the vertical direction.

In some embodiments, the inclined rolling cutter mechanism includes an inclined rolling cutter and a first installation plate, the inclined rolling cutter is mounted on the first installation plate through a bearing, the flat rolling cutter mechanism includes a flat rolling cutter and a second installation plate, and the flat rolling cutter is mounted on the second installation plate through a bearing so that the inclined rolling cutter and the flat rolling cutter can rotate along the axis to adjust the tangent positions with the cylindrical cell.

In some embodiments, the first installation plate of the inclined rolling cutter mechanism is mounted on the installation cylinder via a first slider that can slide up and down, and the second installation plate of the flat rolling cutter mechanism is mounted on the installation cylinder via a second slider that can slide up and down so that the inclined rolling cutter mechanism and the flat rolling cutter mechanism are mounted on the rotation mechanism and can slide up and down to adjust the positions in the vertical direction.

In some embodiments, the inclined rolling cutter mechanism and the flat rolling cutter mechanism are separately provided with a distance adjustment mechanism, and the distance adjustment mechanism is configured to adjust the distances of the inclined rolling cutter mechanism and the flat rolling cutter mechanism in the vertical and horizontal directions.

In some embodiments, the distance adjustment mechanism includes a first vertical micrometer, a second vertical micrometer, and a horizontal micrometer, the first vertical micrometer is vertically fixedly connected to the first installation plate of the inclined rolling cutter mechanism to adjust the distance of the inclined rolling cutter mechanism in the vertical direction, and the second vertical micrometer is vertically fixedly connected to the second installation plate of the flat rolling cutter mechanism to adjust the distance of the flat rolling cutter mechanism in the vertical direction.

In some embodiments, the horizontal micrometer is movably connected to the first installation plate or the second installation plate. When the cylindrical cell needs to be grooved obliquely, the inclined rolling cutter of the inclined rolling cutter mechanism is tangent to the cylindrical cell, and the flat rolling cutter mechanism is engaged with the horizontal micrometer; when the cylindrical cell needs to be grooved flatly, the flat rolling cutter of the flat rolling cutter mechanism is tangent to the cylindrical cell, and the inclined rolling cutter mechanism is engaged with the horizontal micrometer.

In some embodiments, the first vertical micrometer and the second vertical micrometer are fixedly connected through a first fixing plate, and the first fixing plate can make the first vertical micrometer and the second vertical micrometer stand upright and keep the first vertical micrometer and the second vertical micrometer parallel in the vertical direction.

In some embodiments, the horizontal micrometer is fixedly connected to the second base plate via a second fixing plate, and the second fixing plate is configured to support the horizontal micrometer so that the horizontal micrometer remains horizontal and stable.

### BENEFICIAL EFFECTS

The present application provides a rolling cutter device for rolling grooving of a cylindrical battery. The device includes an inclined rolling cutter mechanism, a flat rolling cutter mechanism, and a switching mechanism. The switching mechanism includes a rotation mechanism and a locking mechanism. The rotation mechanism is configured to drive the inclined rolling cutter mechanism and the flat rolling cutter mechanism to rotate. The locking mechanism is configured to lock the position of the rotation mechanism. When a rolling cutter needs to be switched, the rotation mechanism is rotated to interchange the positions of the inclined rolling cutter mechanism and the flat rolling cutter mechanism. Thus, it is ensured that the inclined rolling cutter of the inclined rolling cutter mechanism or the flat rolling cutter of the flat rolling cutter mechanism is tangent to the cylindrical cell. The locking mechanism then locks the position of the rotation mechanism, preventing any wobbling of the inclined rolling cutter or flat rolling cutter when groove rolling is performed on the cylindrical cell. Thus, the implementation of either inclined rolling grooving or flat rolling grooving on the cylindrical cell is achieved. The rolling cutter device for rolling grooving of a cylindrical battery described in the present application is compatible with both the inclined rolling cutter mechanism and the flat rolling cutter mechanism. A switching mechanism is disposed between the inclined rolling cutter mechanism and flat rolling cutter mechanism to enable positional interchange of the two mechanisms when a rolling cutter switch is needed. This design ensures the compatible production of different cylindrical batteries and grooving mechanisms, improves the efficiency of rolling cutter replacement, maintains consistency across mechanisms, and achieves high production efficiency, better grooving consistency, and enhanced stability of battery performance of the cylindrical battery.

### BRIEF DESCRIPTION OF DRAWINGS

FIG. 1 is a view illustrating the structure of a rolling cutter device for rolling grooving of a cylindrical battery according to the present application.
FIG. 2 is a front view of the structure of a rolling cutter device for rolling grooving of a cylindrical battery according to the present application.

### Reference list

1 inclined rolling cutter mechanism
11 inclined rolling cutter
12 first installation plate
2 flat rolling cutter mechanism
21 flat rolling cutter
22 second installation plate
3 switching mechanism
31 rotation mechanism
311 rotation cylinder
312 installation cylinder
32 locking mechanism
321 limiting plate
322 positioning pin
4 distance adjustment mechanism
41 first vertical micrometer
42 second vertical micrometer
43 horizontal micrometer
5 first base plate
6 horizontal slider
7 second base plate
8 first fixing plate
9 second fixing plate
10 first slider
100 second slider

### DETAILED DESCRIPTION

The present application is described below in conjunction with the drawings.

The present application will be described with reference to the drawings and the embodiments. The embodiments described herein are intended to explain and not to limit the present application.

### Embodiment one

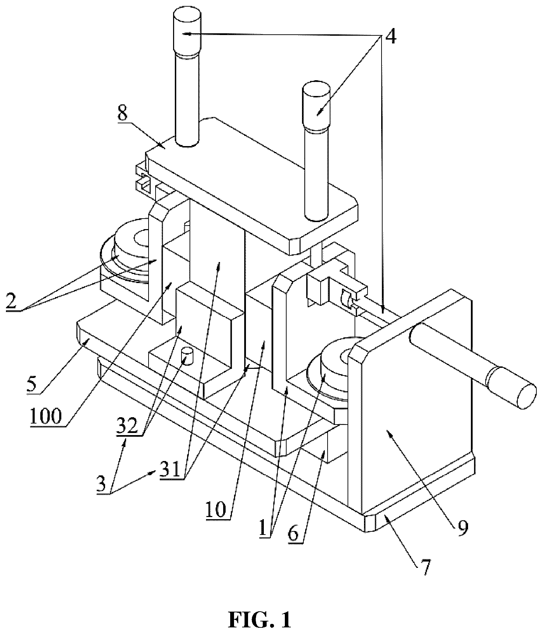

As shown in FIG. 1, a rolling cutter device for rolling grooving of a cylindrical battery includes an inclined rolling cutter mechanism 1, a flat rolling cutter mechanism 2, and a switching mechanism 3; the switching mechanism 3 includes a rotation mechanism 31 and a locking mechanism 32, the rotation mechanism 31 is configured to drive the inclined rolling cutter mechanism 1 and the flat rolling cutter mechanism 2 to rotate, and the locking mechanism 32 is configured to lock the position of the rotation mechanism 31.

When a rolling cutter needs to be switched, the rotation mechanism 31 is rotated to interchange the positions of the inclined rolling cutter mechanism 1 and the flat rolling cutter mechanism 2. Thus, it is ensured that the inclined rolling cutter 11 of the inclined rolling cutter mechanism 1 or the flat rolling cutter 21 of the flat rolling cutter mechanism 2 is tangent to the cylindrical cell. The locking mechanism 33 then locks the position of the rotation mechanism 31, preventing any wobbling of the inclined rolling cutter 11 or flat rolling cutter 21 when groove rolling is performed on the cylindrical cell. Thus, the implementation of either inclined rolling grooving or flat rolling grooving on the cylindrical cell is achieved. This design ensures the compatible production of different cylindrical batteries and grooving mechanisms, improves the efficiency of rolling cutter replacement, maintains consistency across mechanisms, and achieves high production efficiency, better grooving consistency, and enhanced stability of battery performance of the cylindrical battery.

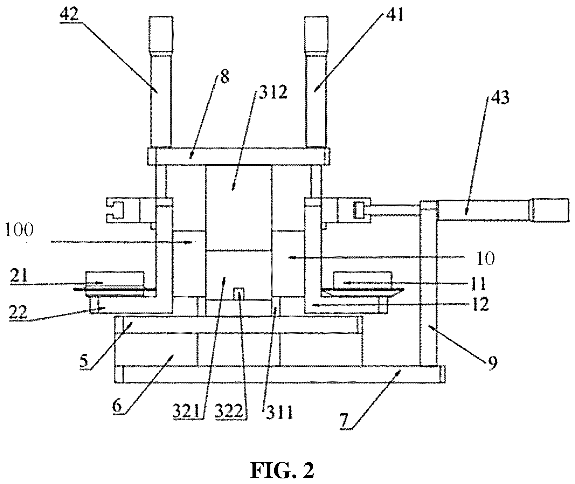

In some embodiments, the inclined rolling cutter mechanism 1 and the flat rolling cutter mechanism 2 may be symmetrically disposed along the axis of the rotation mechanism 31 so that the inclined rolling cutter mechanism 1 and the flat rolling cutter mechanism 2 can be switched and assembled with other mechanisms. Since the inclined rolling cutter mechanism 1 and the flat rolling cutter mechanism 2 are arranged on the same rotation mechanism 31, the rotation mechanism 31 can simultaneously drive the inclined rolling cutter mechanism 1 and the flat rolling cutter mechanism 2 to rotate, so as to facilitate the transposition of the inclined rolling cutter mechanism 1 and the flat rolling cutter mechanism 2, as shown in FIG. 2.

In some embodiments, the rotation mechanism 31 includes a rotation cylinder 311 and an installation cylinder 312 disposed above the rotation cylinder 311, the rotation cylinder 311 is fixedly connected to the installation cylinder 312, and the installation cylinder 312 can rotate with the rotation cylinder 311. Exemplarily, the cross-sections of the rotation cylinder 311 and the installation cylinder 312 are square so that the rotation mechanism 31 can be adapted and assembled with other mechanisms. The rotation cylinder 311 is configured to drive the inclined rolling cutter mechanism 1 and the flat rolling cutter mechanism 2 to rotate to achieve horizontal transposition. The installation cylinder 312 is configured to assemble the inclined rolling cutter mechanism 1 and the flat rolling cutter mechanism 2 so that the inclined rolling cutter mechanism 1 and the flat rolling cutter mechanism 2 are installed on the same rotation mechanism 31, as shown in FIG. 2.

In some embodiments, the rotation cylinder 311 is mounted on a first base plate 5, and the rotation cylinder 311 and the first base plate 5 may be connected by a bearing so that the rotation cylinder 311 can rotate horizontally on the first base plate 5. The locking mechanism 32 includes a limiting plate 321 and a positioning pin 322, and the limiting plate 321 is assembled on the first base plate 5 through the positioning pin 322. When the locking mechanism 32 locks the rotation mechanism 31, the limiting plate 321 abuts against the rotation cylinder 311 and the installation cylinder 312 of the rotation mechanism 31, and the limiting plate 321 is tightly fitted against the contact surface of the rotation cylinder 311 and the installation cylinder 312 to lock the rotation mechanism 31. Thus, the rotation mechanism31 is stable and immovable on the first base plate 5. The locking of the rotation mechanism 31 by abutment can avoid destroying the structure of the rotation mechanism 31 and facilitate the horizontal rotation of the rotation mechanism 31, as shown in FIG. 2.

In some embodiments, a horizontal slider 6 may be fixedly connected below the first base plate 5, and the horizontal slider 6 is configured to drive the first base plate 5 to slide horizontally. The horizontal slider 6 may be disposed on the second base plate 7, and the first base plate 5 can slide horizontally along the second base plate 7 through the horizontal slider 6 so that the positions of the inclined rolling cutter mechanism 1 and the flat rolling cutter mechanism 2 can be adjusted in the horizontal direction. Exemplarily, through holes with internal threads may be disposed on the horizontal slider 6 and the second base plate 7, and when the first base plate 5 needs to be locked, bolts may be used to fasten the through holes to fix the first base plate 5, as shown in FIG. 2.

In some embodiments, the inclined rolling cutter mechanism 1 and the flat rolling cutter mechanism 2 are symmetrically disposed on two sides of the installation cylinder 312, and the inclined rolling cutter mechanism 1 and the flat rolling cutter mechanism 2 can slide up and down along the installation cylinder 312 to adjust the positions in the vertical direction, as shown in FIG. 2.

In some embodiments, the inclined rolling cutter mechanism 1 includes an inclined rolling cutter 11 and a first installation plate 12, the inclined rolling cutter 11 is mounted on the first installation plate 12 through a bearing, the flat rolling cutter mechanism 2 includes a flat rolling cutter 21 and a second installation plate 22, and the flat rolling cutter 21 is mounted on the second installation plate 22 through a bearing so that the inclined rolling cutter 11 and the flat rolling cutter 12 can rotate along the axis to adjust the tangent positions with the cylindrical cell, as shown in FIG. 2.

In some embodiments, the first installation plate 12 of the inclined rolling cutter mechanism 1 is mounted on the installation cylinder 312 via a first slider 10 that can slide up and down, and the second installation plate 22 of the flat rolling cutter mechanism 2 is mounted on the installation cylinder 312 via a second slider 100 that can slide up and down. Both the first slider 10 and the second slider 100 can slide up and down along the installation cylinder 312. Exemplarily, a waist hole is disposed on the installation cylinder 312, and through holes are disposed on the first slider 10 and the second slider 100. When the first slider 10 and the second slider 100 need to be locked, the corresponding waist hole and through holes can be fastened by bolts to achieve the installation of the inclined rolling cutter mechanism 1 and the flat rolling cutter mechanism 2 on the rotation mechanism 31, as shown in FIG. 2.

In some embodiments, the inclined rolling cutter mechanism 1 and the flat rolling cutter mechanism 2 are separately provided with a distance adjustment mechanism 4, and the distance adjustment mechanism 4 is configured to adjust the distances of the inclined rolling cutter mechanism 1 and the flat rolling cutter mechanism 2 in the vertical and horizontal directions. Thus, the position of the cylindrical cell and the inclined rolling cutter mechanism 1 or the flat rolling cutter mechanism 2 is precisely measured and adjusted to achieve tangency between the cylindrical cell and the inclined rolling cutter 11 or the flat rolling cutter 21, thereby achieving precise groove rolling of the cylindrical cell, as shown in FIG. 2.

In some embodiments, the distance adjustment mechanism 4 includes a first vertical micrometer 41, a second vertical micrometer 42, and a horizontal micrometer 43, the first vertical micrometer 41 is vertically fixedly connected to the first installation plate 12 of the inclined rolling cutter mechanism 1 to adjust the distance of the inclined rolling cutter mechanism 1 in the vertical direction, and the second vertical micrometer 42 is vertically fixedly connected to the second installation plate 22 of the flat rolling cutter mechanism 2 to adjust the distance of the flat rolling cutter mechanism 2 in the vertical direction, as shown in FIG. 2.

In some embodiments, the horizontal micrometer 43 is movably connected to the first installation plate 12 or the second installation plate 22 through an elastic member. When the cylindrical cell needs to be grooved obliquely, the inclined rolling cutter 11 of the inclined rolling cutter mechanism 1 is tangent to the cylindrical cell, and the flat rolling cutter mechanism 2 is engaged with the horizontal micrometer 43; when the cylindrical cell needs to be grooved flatly, the flat rolling cutter 21 of the flat rolling cutter mechanism 2 is tangent to the cylindrical cell, and the inclined rolling cutter mechanism 1 is engaged with the horizontal micrometer 43, as shown in FIG. 2.

In some embodiments, the first vertical micrometer 41 and the second vertical micrometer 42 are fixedly connected through a first fixing plate 8, and the first fixing plate 8 can make the first vertical micrometer 41 and the second vertical micrometer 42 stand upright and keep the first vertical micrometer 41 and the second vertical micrometer 42 parallel in the vertical direction, so as to accurately measure the distance between the inclined rolling cutter mechanism 1 and the flat rolling cutter mechanism 2 in the vertical direction, as shown in FIG. 2.

The horizontal micrometer 43 is fixed by a second fixing plate 9. In some embodiments, the horizontal micrometer 43 is fixedly connected to the second base plate 7 via the second fixing plate 9, and the second fixing plate 9 is configured to support the horizontal micrometer 43 so that the horizontal micrometer 43 remains horizontal and stable, and the distance between the inclined rolling cutter mechanism 1 and the flat rolling cutter mechanism 2 in the horizontal direction can be accurately measured, as shown in FIG. 2.

In some embodiments, the second fixing plate 9 is vertically connected to the second base plate 7. Exemplarily, through holes may be set on the second fixing plate 9 and the second base plate 7, and the second fixing plate 9 can be locked on the second base plate 7 by fastening the bolts to the through holes, as shown in FIG. 2.

### Embodiment two

A cylindrical cell is grooved using the rolling cutter device for rolling grooving of a cylindrical battery. If switching between the inclined rolling cutter mechanism 1 and the flat rolling cutter mechanism 2 is required, the positioning pin 322 is manually pulled out to disengage the limiting plate 321 from the rotation mechanism 31. The rotation mechanism 31 is rotated by 180° to interchange the positions of the inclined rolling cutter mechanism 1 and the flat rolling cutter mechanism 2. The positioning pin 322 is reinserted so that the limiting plate 321 fits tightly against the rotation mechanism 31, and the switch is completed. The horizontal slider 6 is slidably adjusted along the second base plate 7, and the horizontal micrometer 43 is used for precise distance adjustment so that the horizontal position of the inclined rolling cutter 11 or flat rolling cutter 21 aligns with the cylindrical cell. The first slider 10 or second slider 100 is slidably adjusted along the installation cylinder 312, and the first vertical micrometer 41 or second vertical micrometer 42 is used for precise distance adjustment so that the vertical position of the inclined rolling cutter 11 or flat rolling cutter 21 aligns with the cylindrical cell. After distance adjustments are completed, bolts are used to lock the position of the first slider 10 or second slider 100 on the installation cylinder 312 as well as the position of the horizontal slider 6 on the second base plate 7. The inclined rolling cutter 11 or flat rolling cutter 21 is driven by a driving mechanism installed on the rolling cutter device for rolling grooving of a cylindrical battery to groove the cylindrical cell.

## Claims

1. A rolling cutter device for rolling grooving of a cylindrical battery, comprising an inclined rolling cutter mechanism (1), a flat rolling cutter mechanism (2), and a switching mechanism (3), wherein the switching mechanism (3) comprises a rotation mechanism (31) and a locking mechanism (32), the rotation mechanism (31) is configured to drive the inclined rolling cutter mechanism (1) and the flat rolling cutter mechanism (2) to rotate, and the locking mechanism (32) is configured to lock a position of the rotation mechanism (31).

2. The device according to claim 1, wherein the inclined rolling cutter mechanism (1) and the flat rolling cutter mechanism (2) are symmetrically disposed along an axis of the rotation mechanism (31), and the rotation mechanism (31) is configured to simultaneously drive the inclined rolling cutter mechanism (1) and the flat rolling cutter mechanism (2) to rotate.

3. The device according to claim 2, wherein the rotation mechanism (31) comprises a rotation cylinder (311) and an installation cylinder (312) disposed above the rotation cylinder (311), and the rotation cylinder (311) is configured to drive the installation cylinder (312) to rotate horizontally.

4. The device according to claim 3, wherein the rotation cylinder (311) is mounted on a first base plate (5), the locking mechanism (32) comprises a limiting plate (321) and a positioning pin (322), the limiting plate (321) is fixed to the first base plate (5) by the positioning pin (322), and the limiting plate (321) is tightly fitted against the rotation cylinder (311) and the installation cylinder (312).

5. The device according to claim 4, wherein a horizontal slider (6) is disposed below the first base plate (5), and the horizontal slider (6) is configured to drive the first base plate (5) to slide horizontally.

6. The device according to claim 4, wherein the inclined rolling cutter mechanism (1) and the flat rolling cutter mechanism (2) are configured to slide up and down along the installation cylinder (312).

7. The device according to claim 6, wherein a first installation plate (12) of the inclined rolling cutter mechanism (1) is mounted on the installation cylinder (312) via a first slider (10), a second installation plate (22) of the flat rolling cutter mechanism (2) is mounted on the installation cylinder (312) via a second slider (100), and both the first slider (10) and the second slider (100) are configured to slide up and down along the installation cylinder (312).

8. The device according to claim 7, wherein the inclined rolling cutter mechanism (1) and the flat rolling cutter mechanism (2) are separately provided with a distance adjustment mechanism (4).

9. The device according to claim 8, wherein the distance adjustment mechanism (4) comprises a first vertical micrometer (41), a second vertical micrometer (42), and a horizontal micrometer (43), the first vertical micrometer (41) is connected to the first installation plate (12), the second vertical micrometer (42) is connected to the second installation plate (22), and the horizontal micrometer (43) is connected to either the first installation plate (12) or the second installation plate (22).

10. The device according to claim 9, wherein the first vertical micrometer (41) and the second vertical micrometer (42) are connected by a first fixing plate (8), and the horizontal micrometer (43) is fixed by a second fixing plate (9).
